(19) Europäisches Patentamt / European Patent Office / Office européen des brevets

(11) **EP 2 122 892 B1**

(12) **FASCICULE DE BREVET EUROPEEN**

(45) Date de publication et mention
de la délivrance du brevet:
**03.06.2015 Bulletin 2015/23**

(51) Int Cl.:
*H04L 1/06* [(2006.01)]   *H04L 25/49* [(2006.01)]
*H04B 1/69* [(2011.01)]

(21) Numéro de dépôt: **07872010.9**

(22) Date de dépôt: **21.12.2007**

(86) Numéro de dépôt international:
**PCT/FR2007/052600**

(87) Numéro de publication internationale:
**WO 2008/087343 (24.07.2008 Gazette 2008/30)**

(54) **PROCÉDÉ DE CODAGE SPATIO-TEMPOREL POUR SYSTÈME DE COMMUNICATION MULTI-ANTENNE DE TYPE UWB IMPULSIONNEL**

VERFAHREN ZUR RAUM-ZEIT-KODIERUNG FÜR EIN KOMMUNIKATIONSSYSTEM MIT MEHREREN ANTENNEN UND WELCHES ULTRABREITBANDPULSE VERWENDET

METHOD OF SPATIO-TEMPORAL CODING FOR MULTI-ANTENNA COMMUNICATION SYSTEM OF PULSED UWB TYPE

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **22.12.2006 FR 0655923**

(43) Date de publication de la demande:
**25.11.2009 Bulletin 2009/48**

(73) Titulaire: **Commissariat à l'Énergie Atomique et aux Énergies Alternatives
75015 Paris (FR)**

(72) Inventeur: **ABOU RJEILY, Chadi
Zahle (LB)**

(74) Mandataire: **Ilgart, Jean-Christophe et al
BREVALEX
95, rue d'Amsterdam
75378 Paris Cedex 8 (FR)**

(56) Documents cités:
• CHADI ABOU-RJEILY, NORBERT DANIELE, JEAN-CLAUDE BELFIORE: "A 2*2 Antennas Ultra-Wideband System with Biorthogonal Pulse Position Modulation" IEEE COMMUNICATIONS LETTERS, [Online] vol. 10, no. 5, 5 mai 2006 (2006-05-05), pages 366-368, XP002450772 Extrait de l'Internet: URL:http://comelec.enst.fr/~belfiore/UWB-C L.pdf> [extrait le 2007-09-13]
• SIRIWONGPAIRAT W P ET AL: "Performance analysis of time hopping and direct sequence UWB space-time systems" GLOBAL TELECOMMUNICATIONS CONFERENCE, 2004. GLOBECOM '04. IEEE DALLAS, TX, USA 29 NOV.- 3 DEC., 2004, PISCATAWAY, NJ, USA,IEEE, 29 novembre 2004 (2004-11-29), pages 3526-3530, XP010758392 ISBN: 0-7803-8794-5
• HELIOT F ET AL: "Performance of space-time block coding and space-time trellis coding for impulse radio" GLOBAL TELECOMMUNICATIONS CONFERENCE, 2004. GLOBECOM '04. IEEE DALLAS, TX, USA 29 NOV.- 3 DEC., 2004, PISCATAWAY, NJ, USA,IEEE, 29 novembre 2004 (2004-11-29), pages 3225-3229, XP010758316 ISBN: 0-7803-8794-5

**Description**

**DOMAINE TECHNIQUE**

La présente invention concerne à la fois le domaine des télécommunications en ultra-large bande ou UWB (*Ultra Wide Band*) et celui des systèmes multi-antenne à codage spatio-temporel ou STC (*Space Time Coding*).

**ÉTAT DE LA TECHNIQUE ANTÉRIEURE**

Les systèmes de télécommunication sans fil de type multi-antenne sont bien connus de l'état de la technique. Ces systèmes utilisent une pluralité d'antennes à l'émission et/ou à la réception et sont dénommés, selon le type de configuration adoptée, MIMO (*Multiple Input Multiple Output*), MISO (*Multiple Input Single Output*) ou SIMO (*Single Input Multiple Output*). Par la suite nous emploierons le même terme MIMO pour couvrir les variantes MIMO et MISO précitées. L'exploitation de la diversité spatiale à l'émission et/ou à la réception permet à ces systèmes d'offrir des capacités de canal nettement supérieures à celles des systèmes mono-antenne classique (ou SISO pour Single Input Single Output). Cette diversité spatiale est généralement complétée par une diversité temporelle au moyen d'un codage spatio-temporel. Dans un tel codage, un symbole d'information à transmettre se trouve codé sur plusieurs antennes et plusieurs instants de transmission. On connaît deux grandes catégories de systèmes MIMO à codage spatio-temporel : les systèmes à codage en treillis ou STTC (*Space Time Trellis Coding*) et les systèmes à codage par blocs ou STBC (*Space Time Block Coding*). Dans un système à codage en treillis, le codeur spatio-temporel peut être vu comme une machine à états finis fournissant *P* symboles de transmission aux P antennes en fonction de l'état courant et du symbole d'information à coder. Le décodage à la réception est réalisé par un algorithme de Viterbi multidimensionnel dont la complexité augmente de manière exponentielle en fonction du nombre d'états. Dans un système à codage par blocs, un bloc de symboles d'information à transmettre est codé en une matrice de symboles de transmission, une dimension de la matrice correspondant au nombre d'antennes et l'autre correspondant aux instants consécutifs de transmission.

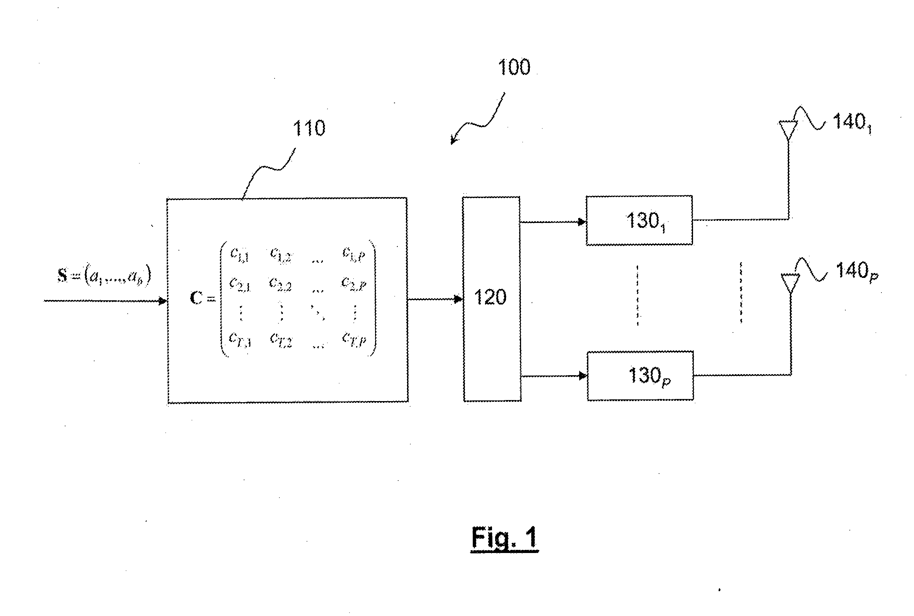

La Fig. 1 représente schématiquement un système de transmission MIMO 100 avec codage STBC. Un bloc de symboles d'information S = $(\sigma_1,...,\sigma_b)$, par exemple un mot binaire de *b* bits ou plus généralement de *b* symboles M-aires, est codé en.une matrice spatio-temporelle :

$$\mathbf{C} = \begin{pmatrix} c_{1,1} & c_{1,2} & ... & c_{1,P} \\ c_{2,1} & c_{2,2} & ... & c_{2,P} \\ \vdots & \vdots & \ddots & \vdots \\ c_{T,1} & c_{T,2} & ... & c_{T,P} \end{pmatrix} \qquad (1)$$

où les coefficients $c_{t,p}$, $t = 1,..,T$; $p = 1,..,P$ du code sont en règle générale des coefficients complexes dépendant des symboles d'information, *P* est le nombre d'antennes utilisées à l'émission, *T* est un entier indiquant l'extension temporelle du code, c'est-à-dire le nombre d'utilisations du canal ou PCUs (*Per Channel Use*).

La fonction *f* qui, à tout vecteur **S** de symboles d'information, fait correspondre le mot de code spatio-temporel **C,** est appelée fonction de codage. Si la fonction *f* est linéaire on dit que le code spatio-temporel est linéaire. Si les coefficients $c_{t,p}$ sont réels, le code spatio-temporel est dit réel.

Sur la Fig. 1, on a désigné par 110 un codeur spatio-temporel. A chaque instant d'utilisation de canal *t*, le codeur fournit au multiplexeur 120 le *t-ème* vecteur-ligne de la matrice **C**. Le multiplexeur transmet aux modulateurs $130_1,...,130_P$ les coefficients du vecteur ligne et les signaux modulés sont transmis par les antennes $140_1,...,140_P$.

Le code spatio-temporel est caractérisé par son débit, c'est-à-dire par le nombre de symboles d'information qu'il transmet par instant d'utilisation de canal (PCU). Le code est dit à plein débit s'il est *P* fois plus élevé que le débit relatif à une utilisation mono-antenne (SISO).

Le code spatio-temporel est caractérisé en outre par sa diversité qui peut être définie comme le rang de la matrice **C**. On aura une diversité maximale si pour deux mots de code $\mathbf{C}_1$ et $\mathbf{C}_2$ quelconques correspondant à deux vecteurs $\mathbf{S}_1$ et $\mathbf{S}_2$, la matrice $\mathbf{C}_1 - \mathbf{C}_2$ est de rang plein.

Le code spatio-temporel est enfin caractérisé par son gain de codage qui traduit la distance minimale entre différents mots du code. On peut le définir comme :

$$\min_{\mathbf{C}_1 \neq \mathbf{C}_2} \det\left((\mathbf{C}_1 - \mathbf{C}_2)^H (\mathbf{C}_1 - \mathbf{C}_2)\right) \qquad (2)$$

ou, de manière équivalente, pour un code linéaire :

$$\min_{\mathbf{C}\neq 0} \det\left(\mathbf{C}^{\mathbf{H}}\mathbf{C}\right) \qquad (3)$$

où det($\mathbf{C}$) signifie le déterminant de $\mathbf{C}$ et $C^H$ est la matrice conjuguée transposée de $\mathbf{C}$. Pour une énergie de transmission par symbole d'information, le gain de codage est borné.

Un code spatio-temporel sera d'autant plus résistant à l'évanouissement que son gain de codage sera élevé.

Un exemple de codage spatio-temporel pour un système MIMO à deux antennes de transmission a été proposé dans l'article de S.M. Alamouti intitulé « A transmit diversity technique for wireless communications », publié dans IEEE Journal on selected areas in communications, vol. 16, pp. 1451-1458, Oct. 1998. Le code d'Alamouti est défini par la matrice spatiotemporelle 2×2:

$$\mathbf{C} = \begin{pmatrix} \sigma_1 & \sigma_2 \\ -\sigma_2^* & \sigma_1^* \end{pmatrix} \qquad (4)$$

où $\sigma_1$ et $\sigma_2$ sont deux symboles d'information à transmettre et $\sigma_1^*$ et $\sigma_2^*$ leurs conjugués respectifs. Comme on peut le voir dans l'expression (4), ce code transmet deux symboles d'information pour deux utilisations de canal et son débit est donc d'un symbole/PCU.

Bien qu'initialement présenté dans l'article précité pour des symboles appartenant à une modulation QAM, le code d'Alamouti s'applique également à des symboles d'information appartenant à une modulation PAM ou PSK. En revanche il ne peut aisément s'étendre à une modulation de position, dite aussi PPM (*Pulse Position Modulation*). Le symbole d'un alphabet de modulation PPM à $M$ positions peut être représenté par un vecteur de $M$ composantes toutes nulles sauf une égale à 1, correspondant à la position de modulation à laquelle une impulsion est émise. L'utilisation de symboles PPM dans l'expression (4) conduit alors à une matrice spatiotemporelle de taille 2$M$×2. Le terme $-\sigma_2^*$ figurant dans la matrice n'est pas un symbole PPM et nécessite la transmission d'une impulsion affectée d'un changement de signe. Autrement dit, cela revient à utiliser des symboles PPM signés, appartenant à une extension de l'alphabet de modulation PPM.

De manière plus générale, l'utilisation de symboles PPM dans les codes spatio-temporels, notamment ceux définis par V. Tarokh et al. dans l'article intitulé « Space-time block codes from orthogonal designs » paru dans IEEE Trans. on Information Theory, Vol. 45, No. 5, July 1999, pp. 1456-1567, conduisent à une extension de l'alphabet de modulation PPM.

Un autre domaine des télécommunications fait actuellement l'objet de recherches considérables. Il s'agit des systèmes de télécommunication UWB, pressentis notamment pour le développement des futurs réseaux personnels sans fil (WPAN). Ces systèmes ont pour spécificité de travailler directement en bande de base avec des signaux très large bande. On entend généralement par signal UWB un signal conforme au masque spectral stipulé dans la réglementation du FCC du 14 Février 2002 et révisé en Mars 2005, c'est-à-dire pour l'essentiel un signal dans la bande spectrale 3.1 à 10.6 GHz et présentant une largeur de bande d'au moins 500 MHz à -10dB. En pratique, on connaît deux types de signaux UWB, les signaux multi-bande OFDM (MB-OFDM) et les signaux UWB de type impulsionnel. Nous nous intéresserons par la suite uniquement à ces derniers.

Un signal UWB impulsionnel est constitué d'impulsions très courtes, typiquement de l'ordre de quelques centaines de picosecondes, réparties au sein d'une trame. Afin de réduire l'interférence multi-accès (MAI pour *Multiple Access Interference*), un code de sauts temporels (TH pour *Time Hopping*) distinct est affecté à chaque utilisateur. Le signal issu ou à destination d'un utilisateur $k$ peut alors s'écrire sous la forme:

$$s_k(t) = \sum_{n=0}^{N_s-1} w(t - nT_s - c_k(n)T_c) \qquad (5)$$

où w est la forme de l'impulsion élémentaire, $T_c$ est une durée bribe (ou chip), $T_s$ est la durée d'un intervalle élémentaire avec $N_s = N_c T_c$ où $N_c$ est le nombre de chips dans un intervalle, la trame totale étant de durée $T_f = N_s T_s$. où $N_s$ est le

nombre d'intervalles dans la trame. La durée de l'impulsion élémentaire est choisie inférieure à la durée chip, soit $T_w \leq T_c$. La séquence $c_k(n)$ pour $n = 0,.., N_s - 1$ définit le code de saut temporel de l'utilisateur $k$. Les séquences de sauts temporels sont choisies de manière à minimiser le nombre de collisions entre impulsions appartenant à des séquences de saut temporel d'utilisateurs différents.

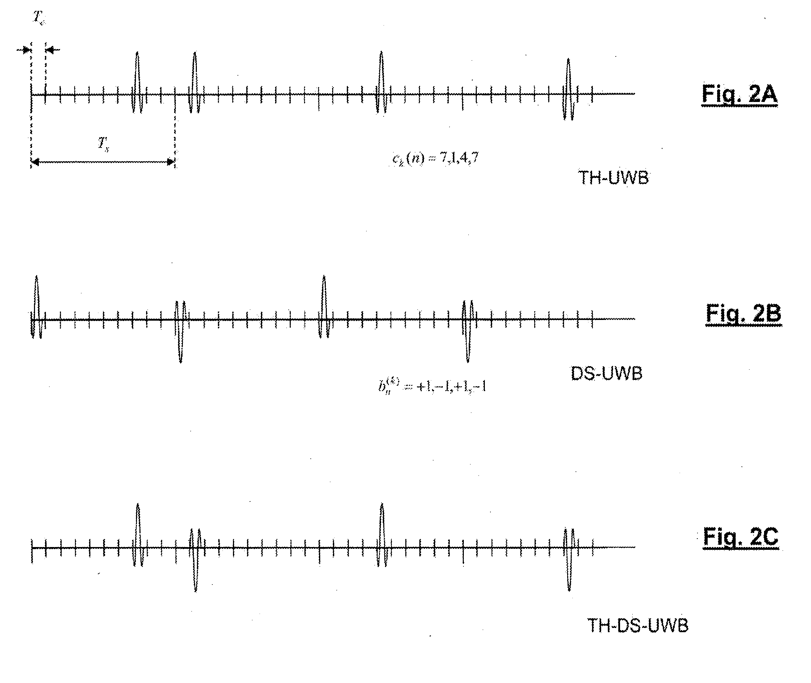

On a représenté en Fig. 2A un signal TH-UWB associé à un utilisateur $k$. Afin de transmettre un symbole d'information donné en provenance ou à destination d'un utilisateur $k$, on module généralement le signal TH-UWB à l'aide d'une modulation de position, soit pour le signal modulé :

$$s_k(t) = \sum_{n=0}^{N_s-1} w(t - nT_s - c_k(n)T_c - \mu_k \varepsilon) \qquad (6)$$

où $\varepsilon$ est un retard de modulation (*dither*) sensiblement inférieur à la durée chip et $\mu_k \in \{0,...M-1\}$ est la position $M$-aire PPM du symbole.

Au lieu de séparer les différents utilisateurs au moyen de codes de sauts temporels, il est également possible de les séparer par des codes orthogonaux, par exemple des codes de Hadamard, comme en DS-CDMA. On parle alors de DS-UWB (*Direct Spread* UWB). Dans ce cas on a pour l'expression du signal non modulé, correspondant à (5) :

$$s_k(t) = \sum_{n=0}^{N_S-1} b_n^{(k)} w(t - nT_s) \qquad (7)$$

où $b_n^{(k)}$ , $n = 0,...,N_s-1$ est la séquence d'étalement de l'utilisateur $k$. On remarque que l'expression (7) est analogue à celle d'un signal DS-CDMA classique. Elle en diffère cependant par le fait que les chips n'occupent pas toute la trame mais sont répartis à la période $T_s$. On a représenté en Fig. 2B un signal DS-UWB associé à un utilisateur $k$.

Comme précédemment, les symboles d'information peuvent être transmis au moyen d'une modulation PPM. Le signal DS-UWB modulé en position correspondant au signal TH-UWB (6) peut s'exprimer, en conservant les mêmes notations :

$$s_k(t) = \sum_{n=0}^{N_s-1} b_n^{(k)}.w(t - nT_s - \mu_k \varepsilon) \qquad (8)$$

Enfin, il est connu de combiner codes de sauts temporels et codes d'étalement spectral pour offrir des accès multiples aux différents utilisateurs. On obtient ainsi un signal UWB impulsionnel TH-DS-UWB de forme générale :

$$s_k(t) = \sum_{n=0}^{N_S-1} b_n^{(k)}.w(t - nT_s - c_k(n)T_c) \qquad (9)$$

On a représenté en Fig. 2C un signal TH-DS-UWB associé à un utilisateur $k$. Ce signal peut être modulé par une modulation de position. On obtient alors pour le signal modulé :

$$s_k(t) = \sum_{n=0}^{N_s-1}\sum_{m=0}^{M-1} b_n^{(k)}.w(t - nT_s - c_k(n)T_c - \mu_k \varepsilon) \qquad (10)$$

Il est connu de l'état de la technique d'utiliser des signaux UWB dans des systèmes MIMO. Dans ce cas, chaque antenne transmet un signal UWB modulé en fonction d'un symbole d'information ou d'un bloc de tels symboles (STBC). Cependant, comme on l'a vu précédemment, l'utilisation de symboles d'information PPM dans des codes spatio-temporels nécessite d'utiliser des impulsions signées, c'est-à-dire de recourir à un alphabet de modulation étendu 2-PAM-M-PPM. La prise en compte de l'inversion de phase suppose en outre une architecture RF à l'émission et à la réception plus complexe que celle d'un système impulsionnel classique. Enfin, certains systèmes UWB ne se prêtent pas ou mal à la transmission d'impulsions signées. Par exemple, les systèmes UWB optiques ne transmettent que des signaux d'intensité lumineuse TH-UWB, nécessairement dépourvus d'information de signe.

L'article écrit par Chadi Abou-Rjeil, Norbert Daniele et Jean-Claude Belfiore et intitulé "A 22 Antennas Ultra-Wideband System with Biorthogonal Pulse Position Modulation", IEEE Communications Letters, vol. 10, no. 5, publié le 5 mai 2006, pages 366-368, décrit un procédé de codage spatio-temporel pour un système MIMO-UWB dans lequel un bloc de symboles *M*-PPM-*M'*-PAM est codé, à travers une matrice de codage C, en une séquence de vecteurs destinés à être émis par une pluralité d'antennes. Un élément de la matrice C subit la factorisation avec une matrice de permutation $\Omega$.

Pour M'=1, des symboles purement PPM entrent dans le codage. Les éléments de la matrice C représentent des combinaisons linéaires des symboles $a_i$ à transmettre, i=1,...,4, se fondant sur un multiplicateur $\theta$. Les éléments de la deuxième ligne de la matrice C contiennent le conjugué de $\theta$, défini comme $-1/\theta$. Par conséquent, un changement de signe est introduit dans quelques symboles transmis.

Comme expliqué ci-dessus, de tels symboles PPM signés sont cependant difficiles à détecter.

Le but de la présente invention est de proposer un procédé de codage particulièrement simple et robuste pour un système UWB multi-antenne. Tout en utilisant une modulation de position, le procédé de codage selon la présente invention ne requiert pas d'extension de l'alphabet de modulation. Il permet en particulier de ne pas recourir à la transmission d'impulsions signées lorsque le signal de support de modulation est du type TH-UWB.

## EXPOSÉ DE L'INVENTION

La présente invention est définie par un procédé de codage spatio-temporel pour système de transmission UWB comprenant une pluralité d'éléments radiatifs, ledit procédé codant un bloc de symboles d'information **S = ($\sigma_i,\sigma_2,...,\sigma_P$)** appartenant à un alphabet de modulation PPM, en une séquence de vecteurs, les composantes d'un vecteur étant destinées à moduler en position un signal UWB impulsionnel pour un élément radiatif dudit système et une utilisation de canal de transmission donnés, chaque composante correspondant à une position de modulation PPM. Selon ce procédé, lesdits vecteurs sont obtenus à partir des éléments de la matrice :

$$C = \begin{pmatrix} \sigma_1 & \sigma_2 & \cdots & \sigma_P \\ \Omega\sigma_P & \sigma_1 & \ddots & \vdots \\ \vdots & \ddots & \ddots & \sigma_2 \\ \Omega\sigma_2 & \cdots & \Omega\sigma_P & \sigma_1 \end{pmatrix}$$

une ligne de la matrice correspondant à une utilisation du canal de transmission et une colonne de la matrice correspondant à un élément radiatif, la matrice **C** étant définie à une permutation près de ses lignes et/ou ses colonnes et $\Omega$ étant une permutation des positions de modulation PPM.

La permutation $\Omega$ peut être une permutation circulaire desdites positions de modulation, par exemple un décalage circulaire de ces positions.

Avantageusement, les éléments radiatifs sont des antennes UWB ou des diodes laser ou encore des diodes électroluminescentes.

Ledit signal impulsionnel peut être un signal TH-UWB, un signal DS-UWB ou encore un signal TH-DS-UWB.

La présente invention se définit également par un système de transmission UWB comprenant une pluralité d'éléments radiatifs et :

- des moyens de codage pour coder un bloc de symboles d'information **S = ($\sigma_1,\sigma_2,...,\sigma_P$)** appartenant à un alphabet de modulation PPM, en une séquence de vecteurs, chaque vecteur étant associé à une utilisation du canal de transmission et un élément radiatif donnés, chaque composante d'un vecteur correspondant à une position de modulation PPM, lesdits vecteurs étant obtenus à partir des éléments de la matrice

$$C = \begin{pmatrix} \sigma_1 & \sigma_2 & \cdots & \sigma_P \\ \Omega\sigma_P & \sigma_1 & \ddots & \vdots \\ \vdots & \ddots & \ddots & \sigma_2 \\ \Omega\sigma_2 & \cdots & \Omega\sigma_P & \sigma_1 \end{pmatrix}$$

une ligne de la matrice correspondant à une utilisation de canal de transmission et une colonne de la matrice correspondant à un élément radiatif, la matrice **C** étant définie à une permutation près de ses lignes et/ou ses colonnes et Ω étant une permutation des positions de modulation PPM ;

- une pluralité de modulateurs pour moduler en position un signal UWB impulsionnel, chaque modulateur étant associé à un élément radiatif et modulant en position ledit signal, pendant une utilisation du canal de transmission, à l'aide des composantes du vecteur associé au dit élément radiatif et à ladite utilisation du canal ;

- chaque élément radiatif étant adapté à émettre le signal ainsi modulé par ledit modulateur associé.

**BRÈVE DESCRIPTION DES DESSINS**

D'autres caractéristiques et avantages de l'invention apparaîtront à la lecture d'un mode de réalisation préférentiel de l'invention fait en référence aux figures jointes parmi lesquelles :

la Fig. 1 représente schématiquement un système de transmission MIMO avec codage STBC connu de l'état de la technique ;
les Fig. 2A à 2C représentent les formes respectives de signaux TH-UWB, DS-UWB et TH-DS-UWB ;
la Fig. 3 représente schématiquement un système de transmission UWB multi-antenne selon un mode de réalisation de l'invention ;
la Fig. 4 représente des courbes de taux d'erreur binaire en fonction du rapport signal à bruit en réception, pour le procédé de codage selon l'invention.

**EXPOSÉ DÉTAILLÉ DE MODES DE RÉALISATION PARTICULIERS**

L'idée à la base de l'invention est d'introduire une diversité de codage grâce à un opérateur de permutation agissant sur les positions de modulation des symboles d'information.

On considérera dans la suite un système de transmission UWB à $P$ antennes de transmission et plus généralement, comme on le verra plus loin, à $P$ éléments radiatifs. Les symboles d'information appartiennent à un alphabet de modulation par position. On note comme précédemment $M$ le cardinal de cet alphabet. Le code spatio-temporel utilisé par le système est défini par la matrice suivante, de dimension $PM \times P$ :

$$\mathbf{C} = \begin{pmatrix} \sigma_1 & \sigma_2 & \cdots & \sigma_P \\ \Omega\sigma_P & \sigma_1 & \ddots & \vdots \\ \vdots & \ddots & \ddots & \sigma_2 \\ \Omega\sigma_2 & \cdots & \Omega\sigma_P & \sigma_1 \end{pmatrix} \qquad\qquad (11)$$

où $\sigma_1, \sigma_2, ..., \sigma_P$ sont les symboles d'information à transmettre, représentés sous la forme de vecteurs colonne de dimension $M$ dont les composantes sont toutes nulles à l'exception d'une seule, égale à 1, définissant la position de modulation.

De manière générale, toute permutation sur les lignes (on entend ici par ligne, une ligne de vecteurs) et/ou les colonnes de **C** est un code spatio-temporel selon l'invention, une permutation sur les lignes équivalant à une permutation des instants d'utilisation du canal et une permutation sur les colonnes équivalant à une permutation des antennes de transmission.

La matrice Ω est une matrice de permutation de taille $M \times M$ opérant sur les positions de modulation. On appelle permutation Ω toute bijection de l'ensemble des positions de modulation sur lui-même, à l'exception de l'identité. La matrice de permutation peut être notamment une matrice de permutation circulaire, par exemple un simple décalage circulaire :

$$\mathbf{\Omega} = \begin{pmatrix} \mathbf{0}_{1 \times M-1} & 1 \\ \mathbf{I}_{M-1 \times M-1} & \mathbf{0}_{M-1 \times 1} \end{pmatrix} = \begin{pmatrix} 0 & 0 & \cdots & 0 & 1 \\ 1 & 0 & \cdots & 0 & 0 \\ 0 & 1 & 0 & \ddots & \vdots \\ \vdots & \ddots & \ddots & \ddots & 0 \\ 0 & \cdots & 0 & 1 & 0 \end{pmatrix} \qquad (12)$$

où $I_{M-1 \times M-1}$ est la matrice identité de taille $M - 1$, $0_{1 \times M-1}$ est le vecteur ligne nul de taille $M - 1$, $0_{M-1 \times 1}$ le vecteur colonne nul de taille $M - 1$.

A titre d'illustration, on peut expliciter la forme de la matrice spatiotemporelle (11) dans le cas où la matrice $\Omega$ est celle d'un décalage circulaire (12) :

$$C = \begin{pmatrix} \sigma_{1,0} & \sigma_{2,0} & \cdots & \sigma_{P,0} \\ \sigma_{1,1} & \sigma_{2,1} & \cdots & \sigma_{P,1} \\ \vdots & \vdots & \cdots & \vdots \\ \sigma_{1,M-1} & \sigma_{2,M-1} & \cdots & \sigma_{P,M-1} \\ \sigma_{P,M-1} & \sigma_{1,0} & \ddots & \vdots \\ \sigma_{P,0} & \sigma_{1,1} & \ddots & \vdots \\ \vdots & \vdots & \ddots & \vdots \\ \sigma_{P,M-2} & \sigma_{1,M-1} & \ddots & \vdots \\ \vdots & \ddots & \ddots & \sigma_{2,0} \\ \vdots & \ddots & \ddots & \sigma_{2,1} \\ \vdots & \ddots & \ddots & \vdots \\ \vdots & \ddots & \ddots & \sigma_{2,M-1} \\ \sigma_{2,M-1} & \cdots & \sigma_{P,M-1} & \sigma_{1,0} \\ \sigma_{2,0} & \cdots & \sigma_{P,0} & \sigma_{1,1} \\ \vdots & \cdots & \vdots & \vdots \\ \sigma_{2,M-2} & \cdots & \sigma_{P,M-2} & \sigma_{1,M-1} \end{pmatrix} \qquad (13)$$

où $\sigma_\ell = (\sigma_{\ell,0} \ \sigma_{\ell,1} \ ... \ \sigma_{\ell,M-1})^T$, $\ell = 1,..,P$ avec $\sigma_{\ell,m} = \delta(m-\mu_\ell)$ où $\mu_\ell$ est la position de modulation relative au symbole $\sigma_\ell$ et $\delta$ est le symbole de Dirac.

Considérons maintenant le cas où le système est bi-antenne ($P=2$) et où la matrice $\Omega$ est une permutation quelconque. On supposera en outre que le système utilise un signal TH-UWB, tel que défini en (5). Le code spatio-temporel module ce signal et est transmis pendant deux utilisations consécutives du canal (PCU). Pendant la première utilisation, l'antenne 1 transmet une première trame, soit en reprenant les notations de (6) :

$$s^1(t) = \sum_{n=0}^{N_s-1} \sum_{m=0}^{M-1} \sigma_{1,m} w(t - nT_s - c(n)T_c - m\varepsilon) = \sum_{n=0}^{N_s-1} w(t - nT_s - c(n)T_c - \mu_1\varepsilon) \qquad (14)$$

et l'antenne 2 transmet simultanément une première trame :

$$s^2(t) = \sum_{n=0}^{N_s-1} \sum_{m=0}^{M-1} \sigma_{2,m} w(t - nT_s - c(n)T_c - m\varepsilon) = \sum_{n=0}^{N_s-1} w(t - nT_s - c(n)T_c - \mu_2\varepsilon) \qquad (15)$$

Pendant la seconde utilisation du canal, l'antenne 1 transmet une seconde trame :

$$s^1(t) = \sum_{n=0}^{N_s-1}\sum_{m=0}^{M-1}\sigma_{2,\omega(m)}w(t-nT_s-c(n)T_c-m\varepsilon) = \sum_{n=0}^{N_s-1}w(t-nT_s-c(n)T_c-\Omega(\mu_2)\varepsilon)$$

$$(16)$$

où $\omega=\Omega^{-1}$ est une permutation de l'ensemble $\{0,1,..,M\text{-}1\}$ et l'antenne 2 transmet simultanément une seconde trame :

$$s^2(t) = \sum_{n=0}^{N_s-1}\sum_{m=0}^{M-1}\sigma_{1,m}w(t-nT_s-c(n)T_c-m\varepsilon) = \sum_{n=0}^{N_s-1}w(t-nT_s-c(n)T_c-\mu_1\varepsilon)$$

$$(17)$$

Il est clair pour l'homme du métier que l'on obtiendrait des expressions similaires en utilisant un signal DS-UWB selon l'expression (7) voire un signal DS-TH-UWB selon l'expression (9) au lieu d'un signal TH-UWB.

Comme on peut le constater à partir de (11) ou (13), les composantes de la matrice **C** sont simplement des 0 et des 1 et non des valeurs signées. Ces composantes n'introduisent par conséquent pas d'inversion de phase ni, de manière générale, de déphasage. Ce code spatio-temporel se prête bien à la modulation d'un signal ultra-large bande.

En outre, la matrice **C** possède le même nombre de « 1 » dans chacune de ses colonnes, ce qui se traduit par une équirépartition avantageuse de l'énergie sur les différentes antennes.

Le code spatio-temporel **C** est aussi à plein débit puisque $P$ symboles d'information sont transmis pendant $P$ utilisations du canal. Son gain de codage est aussi plus élevé que ceux connus dans l'art antérieur.

Enfin, le code spatio-temporel proposé est à diversité maximale. Ceci se montre aisément dans le cas de deux antennes de transmission ($P = 2$). En effet, dans ce cas, la matrice du code spatio-temporel s'écrit :

$$\mathbf{C} = \begin{pmatrix} \boldsymbol{\sigma}_1 & \boldsymbol{\sigma}_2 \\ \boldsymbol{\Omega\sigma}_2 & \boldsymbol{\sigma}_1 \end{pmatrix} \qquad (18)$$

Par définition le code est à diversité maximale si pour tout couple de matrices distinctes **C,C"** du code, $\Delta\mathbf{C}=\mathbf{C}\text{-}\mathbf{C'}$ est de rang plein, c'est-à-dire si :

$$\Delta\mathbf{C} = \begin{pmatrix} \mathbf{a}_1 & \mathbf{a}_2 \\ \boldsymbol{\Omega}\mathbf{a}_2 & \mathbf{a}_1 \end{pmatrix} \qquad (19)$$

où $\mathbf{a}_1 = \sigma_1 \text{-} \sigma'_1$ et $\mathbf{a}_2 = \sigma_2 \text{-} \sigma'_2$, est de rang plein.

Par construction, les vecteurs $\mathbf{a}_1$ et $\mathbf{a}_2$ ont, soit toutes leurs composantes nulles, soit deux composantes non nulles de signes opposés.

La matrice $\Delta\mathbf{C}$ peut s'écrire sous la forme développée :

$$\Delta\mathbf{C} = \begin{pmatrix} a_{1,0} & a_{2,0} \\ \vdots & \vdots \\ a_{1,M-1} & a_{2,M-1} \\ a_{2,\omega(0)} & a_{1,0} \\ \vdots & \vdots \\ a_{2,\omega(M-1)} & a_{1,M-1} \end{pmatrix} \qquad (20)$$

avec $\omega=\Omega^{-1}$ et $a_{\ell,m} = \sigma_{\ell,m} \text{-} \sigma'_{\ell,m}$, $\ell = 1,2$, $m=0,..,M\text{-}1$.

La matrice $\Delta\mathbf{C}$ n'est pas à rang plein si ces deux vecteurs colonne sont colinéaire, c'est-à-dire s'il existe un scalaire $\lambda$, tel que :

$$a_{1,m} = \lambda a_{2,m} \quad \text{et} \quad a_{2,\omega(m)} = \lambda a_{1,m} \qquad (21)$$

qui, compte tenu du fait que $a_{\ell,m} \in \{-1,0,1\}$ et donc $\lambda^2 = 1$, est vérifiée si et seulement si :

$$a_{1,m} = a_{1,\Omega(m)} \quad \text{et} \quad a_{2,m} = a_{2,\omega(m)} \qquad (22)$$

autrement dit les vecteurs $\mathbf{a_1}$ et $\mathbf{a_2}$ sont nécessairement nuls, c'est-à-dire **C=C'**.

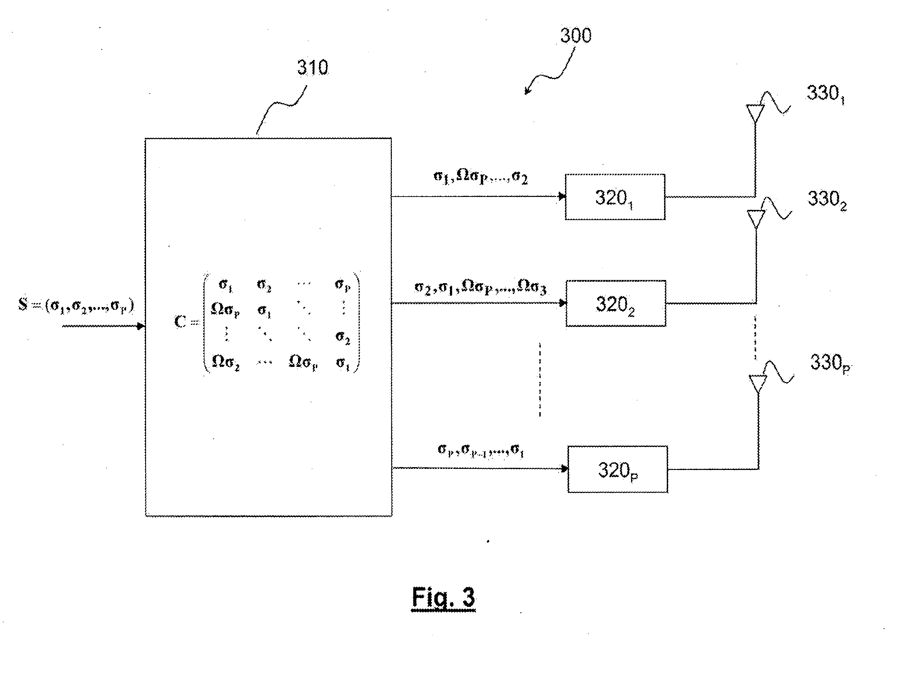

La Fig. 3 illustre un exemple de système de transmission utilisant le codage spatio-temporel selon l'invention.

Le système 300 reçoit des symboles d'information par bloc $\mathbf{S} = (\sigma_1, \sigma_2, ..., \sigma_P)$ où les $\sigma_\ell$, $\ell = 1,..,P$ avec $P > 1$ sont des symboles d'une constellation PPM de cardinal $M > 1$. Alternativement, les symboles d'information peuvent provenir d'une autre constellation $M$-aire à condition de subir préalablement un transcodage (*mapping*) dans ladite constellation PPM. Les symboles d'information peuvent être issus d'une ou d'une pluralité d'opérations bien connues de l'homme du métier telles que codage source, codage canal de type convolutionnel, par bloc ou bien encore turbocodage série ou parallèle, entrelacement, etc.

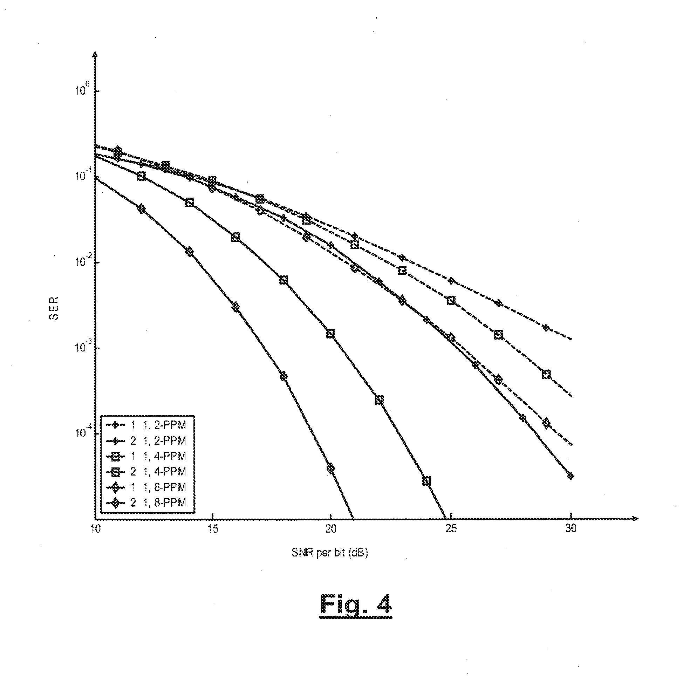

Le bloc de symboles d'information $\mathbf{S} = (\sigma_1, \sigma_2, ..., \sigma_P)$ subit une opération de codage dans le codeur spatio-temporel 310. Plus précisément, le module 310 calcule les coefficients de la matrice **C** obéissant à l'expression (11) ou à une variante obtenue par permutation de ses lignes et/ou ses colonnes comme indiqué précédemment. Les $P$ vecteurs colonnes (vecteurs à $M$ composantes) de la première ligne de **C**, représentant $P$ symboles PPM sont transmis respectivement aux modulateurs UWB $320_1,...,\ 320_P$ pour générer la première trame, puis les $P$ vecteurs colonnes de la seconde ligne de **C**, pour générer la seconde trame etc. jusqu'à la dernière ligne de vecteurs colonnes pour générer la dernière trame. Sur la Fig. 4, l'indice supérieur indique la trame et l'indice inférieur l'élément radiatif $330_1,...,\ 330_P$. Le modulateur UWB $320_1$ génère à partir des vecteurs colonnes $\sigma_1, \Omega\sigma_P, \Omega\sigma_{P-1}..., \sigma_2$, les signaux UWB impulsionnels modulés correspondants. De même, le modulateur UWB $320_2$ génère à partir des vecteurs $\sigma_2, \sigma_1, ..., \Omega\sigma_P, ..., \Omega\sigma_3$ les signaux UWB impulsionnels modulés correspondants, ainsi de suite jusqu'au modulateur UWB $320_P$ à partir des vecteurs $\sigma_P, \sigma_{P-1}, ..., \sigma_1$. Par exemple, si l'on utilise, pour un système bi-antenne ($P = 2$), la matrice de codage spatio-temporel (18) et un signal support de modulation de type TH-UWB, le modulateur UWB $320_1$ fournira successivement les signaux (14) et (16) alors que le modulateur UWB $320_2$ fournira successivement les signaux (15) et (17). Bien que moins avantageux dans le cadre de la présente invention, les signaux UWB impulsionnels servant de support à la modulation peuvent être alternativement du type DS-UWB ou TH-DS-UWB. Dans tous les cas, les signaux UWB impulsionnels ainsi modulés sont transmis ensuite aux éléments radiatifs $330_1$ à $330_P$. Ces éléments radiatifs peuvent être des antennes UWB ou bien des diodes laser ou des DELs, fonctionnant par exemple dans le domaine infrarouge, associées à des modulateurs électro-optiques. Le système de transmission proposé peut alors être utilisé dans le domaine des télécommunications optiques sans fil.

Les signaux UWB transmis par le système illustré en Fig. 3 peuvent être traités par un récepteur multi-antenne de manière classique. Le récepteur pourra par exemple comprendre un étage de corrélation de type Rake suivi d'un étage de décision, utilisant par exemple un décodeur par sphère connu de l'homme du métier.

La Fig. 4 représente les courbes de taux d'erreur binaire en fonction du rapport signal à bruit par bit en réception. Les courbes sont données pour différentes configurations de systèmes, à une ou deux antennes en transmission et une antenne en réception, et pour différents ordres de modulation PPM : 2,4 et 8 positions.

Le traitement en réception est basé sur une technique de décodage par sphère adaptée aux modulations PPM, telle que décrite dans l'article de C. Abou-Rjeily et al. intitulé « MIMO UWB communication systems using modified Hermite pulses » publié dans Proc. on 17th IEEE Annual International Indoor and Radio Communication, Sept. 2006. Il convient de noter que, pour P=2 antennes de transmission, le codage spatio-temporel selon l'invention et le code d'Alamouti présentent les mêmes performances. Toutefois, comme on l'a dit, le codage selon l'invention ne nécessite pas une extension de la constellation PPM.

## Revendications

1. Procédé de codage spatio-temporel pour système de transmission UWB comprenant une pluralité d'éléments radiatifs, ledit procédé codant un bloc de symboles d'information $\mathbf{S} = (\sigma_1, \sigma_2, ..., \sigma_P)$ appartenant à un alphabet de modulation PPM, en une séquence de vecteurs, les composantes d'un vecteur étant destinées à moduler en position un signal UWB impulsionnel pour un élément radiatif dudit système et une utilisation de canal de transmission donnés, chaque composante correspondant à une position de modulation PPM, **caractérisé en ce que** lesdits vecteurs sont obtenus à partir des éléments de la matrice :

EP 2 122 892 B1

$$C = \begin{pmatrix} \sigma_1 & \sigma_2 & \cdots & \sigma_P \\ \Omega\sigma_P & \sigma_1 & \ddots & \vdots \\ \vdots & \ddots & \ddots & \sigma_2 \\ \Omega\sigma_2 & \cdots & \Omega\sigma_P & \sigma_1 \end{pmatrix}$$

une ligne de la matrice correspondant à une utilisation du canal de transmission et une colonne de la matrice correspondant à un élément radiatif, la matrice **C** étant définie à une permutation près de ses lignes et/ou ses colonnes et $\Omega$ étant une permutation des positions de modulation PPM.

2. Procédé de codage spatio-temporel selon la revendication 1, **caractérisé en ce que** $\Omega$ est une permutation circulaire desdites positions de modulation.

3. Procédé de codage spatio-temporel selon la revendication 2, **caractérisé en ce que** $\Omega$ est un décalage circulaire desdites positions de modulation.

4. Procédé de transmission selon l'une des revendications 1 à 3, **caractérisé en ce que** les éléments radiatifs sont des antennes UWB.

5. Procédé de transmission selon l'une des revendications 1 à 3, **caractérisé en ce que** les éléments radiatifs sont des diodes laser ou des diodes électroluminescentes.

6. Procédé selon la revendication 4 ou 5, **caractérisé en ce que** ledit signal impulsionnel est un signal TH-UWB.

7. Procédé selon la revendication 4 ou 5, **caractérisé en ce que** ledit signal impulsionnel est un signal DS-UWB.

8. Procédé selon la revendication 4 ou 5, **caractérisé en ce que** ledit signal impulsionnel est un signal TH-DS-UWB.

9. Système de transmission UWB comprenant une pluralité d'éléments radiatifs, **caractérisé en ce qu'**il comprend :

- des moyens de codage (310) pour coder un bloc de symboles d'information **S = ($\sigma_1,\sigma_2,...,\sigma_P$)** appartenant à un alphabet de modulation PPM, en une séquence de vecteurs, chaque vecteur étant associé à une utilisation du canal de transmission et un élément radiatif donné, chaque composante d'un vecteur correspondant à une position de modulation PPM, lesdits vecteurs étant obtenus à partir des éléments de la matrice

$$C = \begin{pmatrix} \sigma_1 & \sigma_2 & \cdots & \sigma_P \\ \Omega\sigma_P & \sigma_1 & \ddots & \vdots \\ \vdots & \ddots & \ddots & \sigma_2 \\ \Omega\sigma_2 & \cdots & \Omega\sigma_P & \sigma_1 \end{pmatrix}$$

une ligne de la matrice correspondant à une utilisation de canal de transmission et une colonne de la matrice correspondant à un élément radiatif, la matrice **C** étant définie à une permutation près de ses lignes et/ou ses colonnes et $\Omega$ étant une permutation des positions de modulation PPM ;
- une pluralité de modulateurs ($320_1$, $320_2$, .. , 320P) pour moduler en position un signal UWB impulsionnel, chaque modulateur étant associé à un élément radiatif et modulant en position ledit signal, pendant une utilisation du canal de transmission, à l'aide des composantes du vecteur associé au dit élément radiatif et à ladite utilisation du canal ;
- chaque élément radiatif étant adapté à émettre le signal ainsi modulé par ledit modulateur associé.

10

**Patentansprüche**

1.  Verfahren zur Raum-Zeit-Kodierung für ein UWB-Übertragungssystem, das eine Mehrzahl von Strahlungselementen umfasst, wobei das Verfahren einen Block von Informationssymbolen $S = (\sigma_1, \sigma_2,..., \sigma_P)$, die zu einem PPM-Modulationsalphabet gehören, in einer Sequenz von Vektoren kodiert, wobei die Komponenten eines Vektors dazu ausgelegt sind, ein UWB-Pulssignal für ein gegebenes Strahlungselement des Systems und eine gegebene Verwendung des Übertragungskanals in der Position zu modulieren, wobei jede Komponente einer PPM-Modulationsposition entspricht, **dadurch gekennzeichnet, dass** die Vektoren erhalten werden ausgehend von den Elementen der Matrix:

$$C = \begin{pmatrix} \sigma_1 & \sigma_2 & \cdots & \sigma_P \\ \Omega\sigma_P & \sigma_1 & \ddots & \vdots \\ \vdots & \ddots & \ddots & \sigma_2 \\ \Omega\sigma_2 & \cdots & \Omega\sigma_P & \sigma_1 \end{pmatrix}$$

    wobei einer Zeile der Matrix einer Verwendung des Übertragungskanals entspricht, und eine Spalte der Matrix einem Strahlungselement entspricht, wobei die Matrix C bis auf eine Permutation ihrer Zeilen und/oder ihrer Spalten definiert ist, und wobei $\Omega$ eine Permutation der PPM-Modulationspositionen ist.

2.  Verfahren zur Raum-Zeit-Kodierung nach Anspruch 1, **dadurch gekennzeichnet, dass** $\Omega$ eine zyklische Permutation der Modulationspositionen ist.

3.  Verfahren zur Raum-Zeit-Kodierung nach Anspruch 2, **dadurch gekennzeichnet, dass** $\Omega$ eine zyklische Verschiebung der Modulationspositionen ist.

4.  Übertragungsverfahren nach einem der Ansprüche 1 bis 3, **dadurch gekennzeichnet, dass** die Strahlungselemente UWB-Antennen sind.

5.  Übertragungsverfahren nach einem der Ansprüche 1 bis 3, **dadurch gekennzeichnet, dass** die Strahlungselemente Laserdioden oder Elektrolumineszenzdioden sind.

6.  Verfahren nach Anspruch 4 oder 5, **dadurch gekennzeichnet, dass** das Pulssignal ein TH-UWB-Signal ist.

7.  Verfahren nach Anspruch 4 oder 5, **dadurch gekennzeichnet, dass** das Pulssignal ein DS-UWB-Signal ist.

8.  Verfahren nach Anspruch 4 oder 5, **dadurch gekennzeichnet, dass** das Pulssignal ein TH-DS-UWB-Signal ist.

9.  UWB-Übertragungssystem, umfassend eine Mehrzahl von Strahlungselementen, **dadurch gekennzeichnet, dass** es umfasst:

    - Kodierungsmittel (310) zum Kodieren eines Blocks von Informationssymbolen $S = (\sigma_1, \sigma_2,..., \sigma_P)$, die zu einem PPM-Modulationsalphabet gehören, in eine Sequenz von Vektoren, wobei jeder Vektor einer gegebenen Verwendung des Übertragungskanals und einem gegebenen Strahlungselement zugeordnet ist, wobei jede Komponente eines Vektors einer PPM-Modulationsposition entspricht, wobei die Vektoren erhalten sind ausgehend von den Elementen der Matrix

$$C = \begin{pmatrix} \sigma_1 & \sigma_2 & \cdots & \sigma_P \\ \Omega\sigma_P & \sigma_1 & \ddots & \vdots \\ \vdots & \ddots & \ddots & \sigma_2 \\ \Omega\sigma_2 & \cdots & \Omega\sigma_P & \sigma_1 \end{pmatrix}$$

wobei eine Zeile der Matrix einer Verwendung des Übertragungskanals entspricht und eine Spalte der Matrix einem Strahlungselement entspricht, wobei die Matrix **C** bis auf eine Permutation ihrer Zeilen und/oder ihrer Spalten definiert ist, und wobei $\Omega$ eine Permutation der PPM-Modulationspositionen ist;

- eine Mehrzahl von Modulatoren ($320_1$, $320_2$,..,$320_P$) zum Modulieren eines UWB-Pulssignals in der Position, wobei jeder Modulator einem Strahlungselement zugeordnet ist und das Signal in der Position moduliert während einer Verwendung des Übertragungskanals mit Hilfe der Komponenten des Vektors, der dem Strahlungselement und der Verwendung des Kanals zugeordnet ist;

- wobei jedes Strahlungselement dazu ausgelegt ist, das derart modulierte Signal durch den zugeordneten Modulator zu emittieren.

**Claims**

1. A space-time coding method for a UWB transmission system comprising a plurality of radiative elements, said method coding a block of information symbols **S** = $(\sigma_1,\sigma_2,...,\sigma_P)$ belonging to a PPM modulation alphabet, into a sequence of vectors, the components of a vector being intended to position-modulate a UWB pulse signal for a given radiative element of said system and a given use of the transmission channel, each component corresponding to a PPM modulation position, **characterized in that** said vectors are obtained from the elements of the matrix:

$$C = \begin{pmatrix} \sigma_1 & \sigma_2 & \cdots & \sigma_P \\ \Omega\sigma_P & \sigma_1 & \ddots & \vdots \\ \vdots & \ddots & \ddots & \sigma_2 \\ \Omega\sigma_2 & \cdots & \Omega\sigma_P & \sigma_1 \end{pmatrix}$$

a row of the matrix corresponding to a use of the transmission channel and a column of the matrix corresponding to a radiative element, the matrix **C** being defined to within a permutation of its rows and/or its columns and $\Omega$ being a permutation of the PPM modulation positions.

2. The space-coding method according to claim 1, **characterized in that** $\Omega$ is a circular permutation of said modulation position.

3. The space-coding method according to claim 2, **characterized in that** $\Omega$ is a circular shift of said modulation positions.

4. The transmission method according to any of claims 1 to 3, **characterized in that** the radiative elements are UWB antennas.

5. The transmission method according to any of claims 1 to 3, **characterized in that** the radiative elements are laser diodes or light-emitting diodes.

6. The method according to claim 4 or 5, **characterized in that** said pulse signal is a TH-UWB signal.

7. The method according to claim 4 or 5, **characterized in that** said pulse signal is a DS-UWB signal.

**8.** The method according to claim 4 or 5, **characterized in that** said pulse signal is a TH-DS-UWB signal.

**9.** A UWB transmission system comprising a plurality of radiative elements, **characterized in that** it comprises:

- coding means (310) for coding a block of information symbols $\mathbf{S} = (\sigma_1, \sigma_2, ..., \sigma_P)$ belonging to a PPM modulation alphabet, into a sequence of vectors, each vector being associated with a given use of the transmission channel and a given radiative element, each component of a vector corresponding to a PPM modulation position, said vectors being obtained from the elements of the matrix

$$\mathbf{C} = \begin{pmatrix} \sigma_1 & \sigma_2 & \cdots & \sigma_P \\ \Omega\sigma_P & \sigma_1 & \ddots & \vdots \\ \vdots & \ddots & \ddots & \sigma_2 \\ \Omega\sigma_2 & \cdots & \Omega\sigma_P & \sigma_1 \end{pmatrix}$$

a row of the matrix corresponding to a use of the transmission channel and a column of the matrix corresponding to a radiative element, the matrix $\mathbf{C}$ being defined to within a permutation of its rows and/or its columns and $\Omega$ being a permutation of the PPM modulation positions;
- a plurality of modulators $(320_1, 320_2, .., 320_P)$ for position-modulating a UWB pulse signal, each modulator being associated with a radiative element and position-modulating said signal, during a use of the transmission channel, by means of components of the vector associated with said radiative element and with said use of the channel;
- each radiative element being adapted for emitting the signal thereby modulated by said associated modulator.

EP 2 122 892 B1

$$\mathbf{S}=(a_1,...,a_b)$$

$$\mathbf{C}=\begin{pmatrix} c_{1,1} & c_{1,2} & ... & c_{1,P} \\ c_{2,1} & c_{2,2} & ... & c_{2,P} \\ \vdots & \vdots & \ddots & \vdots \\ c_{T,1} & c_{T,2} & ... & c_{T,P} \end{pmatrix}$$

100

110

120

$130_1$

$130_P$

$140_1$

$140_P$

**Fig. 1**

EP 2 122 892 B1

$T_c$

$T_s$

$c_k(n) = 7,1,4,7$

TH-UWB

**Fig. 2A**

$b_n^{(k)} = +1,-1,+1,-1$

DS-UWB

**Fig. 2B**

TH-DS-UWB

**Fig. 2C**

Fig.3

**Fig. 4**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **S.M. ALAMOUTI.** A transmit diversity technique for wireless communications. *IEEE Journal on selected areas in communications,* Octobre 1998, vol. 16, 1451-1458
- **V. TAROKH et al.** Space-time block codes from orthogonal designs. *IEEE Trans. on Information Theory,* Juillet 1999, vol. 45 (5), 1456-1567
- A 22 Antennas Ultra-Wideband System with Biorthogonal Pulse Position Modulation. *IEEE Communications Letters,* 05 Mai 2006, vol. 10 (5), 366-368
- **C. ABOU-RJEILY et al.** MIMO UWB communication systems using modified Hermite pulses. *Proc. on 17th IEEE Annual International Indoor and Radio Communication,* Septembre 2006